# EUROPÄISCHE PATENTSCHRIFT

(11) **EP 3 996 520 B1**
(45) Veröffentlichungstag und Bekanntmachung des Hinweises auf die Patenterteilung: **02.08.2023**
(21) Anmeldenummer: 20734541.4
(22) Anmeldetag: 25.06.2020
(51) Int. Cl.: A23K 20/105, A23K 50/30, A23K 50/75, A23K 20/24

(54) **KONZENTRAT ZUR HERSTELLUNG EINER TRÄNKLÖSUNG**
CONCENTRATE FOR PRODUCING A WETTING SOLUTION
CONCENTRÉ DESTINÉ À LA PRÉPARATION D'UNE SOLUTION D'ABREUVEMENT

(30) Priorität: 12.07.2019 DE 102019118898
(43) Veröffentlichungstag der Anmeldung: 18.05.2022
(73) Patentinhaber: Alzchem Trostberg GmbH, 83308 Trostberg (DE)
(72) Erfinder: GÜTHNER, Thomas, 83308 Trostberg (DE); MEINDL, Alexander, 83308 Trostberg (DE)
(74) Vertreter: Weickmann & Weickmann PartmbB
(86) Internationale Anmeldenummer: PCT/EP2020/067846
(87) Internationale Veröffentlichungsnummer: WO 2021/008848

(56) Entgegenhaltungen:
- WO-A1-2015/185516
- CN-A- 109 258 970
- US-A1- 2012 238 629
- MILAN VRANES ET AL: "Experimental and computational study of guanidinoacetic acid self-aggregation in aqueous solution", FOOD CHEMISTRY, Bd. 237, 1. Dezember 2017 (2017-12-01), Seiten 53-57, XP55726092, NL ISSN: 0308-8146, DOI: 10.1016/j.foodchem.2017.05.088

## Beschreibung

Die vorliegende Erfindung betrifft ein Konzentrat zur Herstellung einer Tränklösung, das eine wässrige Lösung von N-(Aminoiminomethyl)-2-aminoethansäure enthält, die eine über das bekannte Maß erhöhte Konzentration an N-(Aminoiminomethyl)-2-aminoethansäure aufweist.

N-(Aminoiminomethyl)-2-aminoethansäure (CAS-Nr. 352-97-6, Summenformel C₃H₇N₃O₂), auch als Guanidinoessigsäure, Guanidinoacetat, Glycocyamin oder N-Amidinoglycin, N-(Aminoiminomethyl)-glycin bekannt, ist eine Guanidinocarbonsäure mit vielfältigen Anwendungen, u.a. in der Synthese von chemischen Produkten, insbesondere Pharmazeutika (vgl. WO 2000059528), zur direkten Anwendung als pharmazeutischer Wirkstoff bei Nierenerkrankungen (vgl. JP 60054320) oder neurodegenerativen Erkrankungen (vgl. CN 106361736), in der Herstellung von Polymeren (vgl. Du, Shuo et. al., Journal of Materials Science (2018), 53(1), 215-229) und als Komplexbildner für Metalle (vgl. Lopes de Miranda et.al., Polyhedron (2003), 22(2), 225-233 bzw. Singh, Padmakshi et. al, Oriental Journal of Chemistry (2008), 24(1), 283-286).

N-(Aminoiminomethyl)-2-aminoethansäure lässt sich z.B. nach Strecker, M. (Jahresber. Fortschr. Chem. Verw. (1861), 530) aus Glycin durch Umsetzung mit Cyanamid herstellen. Alternativ kann N-(Aminoiminomethyl)-2-aminoethansäure z.B. durch Umsetzung von Glycin mit S-Methylisothioharnstoff-Jodid unter Verwendung von Kaliumhydroxid als Base hergestellt werden (vgl. US 2654779). Auch die Umsetzung von Chloressigsäure mit Ammoniak zu Glycinhydrochlorid und dessen weitere Umsetzung mit Cyanamid wurden beschrieben (vgl. US 2620354).

CN 109 258 970 A beschreibt ein Antistressmittel für Tiere umfassend Guanidinoessigsäure. WO 2015/185516 A1 beschreibt ein Verfahren und Vorrichtungen zur Emulsionsspaltung und zur Komplexierung von organischen Verbindungen in Emulsionen.

Vielfältige Studien haben unter anderem auch gezeigt, dass der Einsatz von N-(Aminoimino-methyl)-2-aminoethansäure während der Aufzucht, während der Haltung oder in der Mast des Geflügels eine Futtermittelersparnis, eine Verbesserung der Futteraufnahme und/oder eine Steigerung der Mastleistung bewirkt. So werden mit den internationalen Patentanmeldungen WO 2005/120246, WO 2006/092298, WO 2007/014756, WO 2007/098952 und WO 2009/012960 Futtermittel bzw. Futtermittelzusätze auf Basis von N-(Aminoimino-methyl)-2-aminoethansäure sowie Salze und Lösungen von N-(Aminoimino-methyl)-2-aminoethansäure beschrieben. N-(Aminoimino-methyl)-2-aminoethansäure seit einiger Zeit auf dem Markt erhältlich und ist in der Geflügelmast als Futtermittelzusatz zugelassen.

Als Futtermittelzusatz, beispielsweise als Futtermittelzusatz für Broiler, wird N-(Aminoimino-methyl)-2-aminoethansäure in einer Menge von 600 mg/ kg Futter (0,06 Gew.-% bezogen auf das Futter) eingesetzt. In dieser Anwendung wird die N-(Aminoimino-methyl)-2-aminoethansäure als Feststoff bzw. Feststoffzusammensetzung dem zu verabreichenden Futter beigemengt. In der Praxis hat sich herausgestellt, dass eine zielgerichtete Verwendung des Wirkstoffes aufgrund der einzusetzenden, relativ geringen Menge an Wirkstoff ein effektives Homogenisieren der Futterzusammensetzung voraussetzt.

In den vergangen Jahren wurden für die Mast von Geflügel eine Reihe an Tränksystemen zur kontinuierlichen Bereitstellung von Wasser für die Ernährung der Tiere entwickelt. Diesen Tränksystemen ist gemeinsam, dass den Tieren das Wasser ad-libitum, nämlich zur freien Verfügung, jedoch kontrolliert und bezüglich der verabreichten Menge nachvollziehbar bereitgestellt wird. Über diese Tränksysteme können den Tieren sowohl veterinärmedizinische Wirkstoffe als auch Futtermittelzusatzstoffe verabreicht werden. Somit hat sich in der vergangen Zeit auch eine Methode zur Verabreichung von veterinärmedizinischen Wirkstoffen und Futtermittelzusatzstoffen etabliert, die sich dieser Tränksysteme bedienen. Eine Voraussetzung hierfür ist, dass es sich um wasserlösliche Wirk- und Futtermittelzusatzstoffe handelt.

Bekanntermaßen ist die Löslichkeit der Mehrzahl an Wirk- und Futtermittelzusatzstoffen nicht sehr hoch. Somit besteht seitens der Anwender ein erhöhter Bedarf an Formulierungen dieser Wirk- und Futtermittelzusatzstoffe, die eine verbesserte Löslichkeit der Wirk- und Futtermittelzusatzstoffe zeigen.

Der Erfindung liegt daher die Aufgabe zugrunde, N-(Aminoiminomethyl)-2-aminoethansäure in flüssiger Lösung bereitzustellen, die eine im Vergleich zu den bekannten flüssigen Formen erhöhte Konzentration an N-(Aminoiminomethyl)-2-aminoethansäure aufweist. Diese flüssige Form soll ohne aufwendige Weiterverarbeitung zur Fütterung von Geflügel einsetzbar sein und keine Bestandteile enthalten, die nachteilig für die Mast von Geflügel sind.

Gelöst werden diese Aufgaben durch ein Konzentrat gemäß Anspruch 1. Bevorzugte Ausführungsformen der Erfindung sind in den Unteransprüchen angegeben, die wahlweise miteinander kombiniert werden können.

Gemäß einer ersten Ausführung ist damit ein Konzentrat umfassend eine wässrige Lösung enthaltend N-(Aminoiminomethyl)-2-aminoethansäure und mindestens ein Salz aus der Gruppe Calciumchlorid und Magnesiumchlorid Gegenstand der vorliegenden Erfindung, dessen Lösung bezogen auf das Gesamtgewicht der Lösung
a) 0,5 bis 4 Gew.-% N-(Aminoiminomethyl)-2-aminoethansäure und
b) 10 bis 70 Gew.-% Calciumchlorid und/ oder Magnesiumchlorid und
c) Rest Wasser enthält,
wobei die Inhaltstoffe a) und b) in dem Wasser in gelöster Form vorliegen.

Die Löslichkeit eines Stoffes gibt an, in welchem Umfang ein Reinstoff in einem Lösungsmittel gelöst werden kann. Sie bezeichnet die Eigenschaft des Stoffes, sich unter homogener Verteilung im Lösungsmittel zu lösen. N-(Aminoiminomethyl)-2-aminoethansäure hat eine geringe Löslichkeit in Wasser. So weist eine gesättigte Lösung von N-(Aminoiminomethyl)-2-aminoethansäure in Wasser eine Konzentration von ca. 3,5 g/l (20 °C). Im Rahmen der vorliegenden Erfindung wurde nunmehr gefunden, dass N-(Aminoiminomethyl)-2-aminoethansäure in Calcium- und/ oder Magnesiumchlorid- haltigen Lösungen eine im Vergleich zu bekannten Lösungen von N-(Aminoiminomethyl)-2-aminoethansäure deutlich höhere Löslichkeit aufweist. So konnte gezeigt werden, dass N-(Aminoiminomethyl)-2-aminoethansäure in Calcium- und/ oder Magnesiumchlorid- haltigen Lösungen eine im Vergleich zu wässrigen Lösungen ohne weitere Inhaltstoffe bis zu 10-fach höhere Löslichkeit aufweisen kann. Die Konzentration von N-(Aminoiminomethyl)-2-aminoethansäure in derartigen Lösemitteln beträgt bis zu 40 g/l (20 °C). Somit kann ein Konzentrat zur Verfügung gestellt werden, dass in der Mast von Geflügel hervorragend einsetzbar ist. Neben dem gewünschten Futtermittelzusatzstoff N-(Aminoimino-methyl)-2-aminoethansäure enthält die Lösung ausschließlich Salze, die ihrerseits keinen schädlichen Einfluss auf die Mastleistung oder die Gesundheit der Tiere haben. In der Lebensmittelindustrie finden diese Salze Einsatz als Komplexbildner, Geschmacks-verstärker und Stabilisator. Zudem sind diese Salze in der EU als Lebensmittelzusatzstoff der Nummer E 509 und E 511 zugelassen.

N-(Aminoiminomethyl)-2-aminoethansäure ist eine Guanidinocarbonsäure, die einen isoelektrischen Punkt bei pH 8,5 aufweist. Abhängig vom pH-Wert einer Lösung kann die Verbindung in der Lösung somit als inneres Salz mit Ladungsausgleich oder als Kation oder als Anion vorliegen. Erfindungswesentlich liegt die N-(Aminoiminomethyl)-2-aminoethansäure in den erfindungsgemäßen Salzlösungen in zwitterionischer Form und nicht als Salz vor, das durch eine außerhalb der Guanidinocarbonsäure lokalisierten Ladung neutralisiert wird. Somit liegt N-(Aminoiminomethyl)-2-aminoethansäure erfindungsgemäß in der Lösung als solche und nicht als Salz oder als Komplex vor. Somit kann ein Konzentrat bereitgestellt werden, das eine über das bekannte Maß erhöhte Konzentration an Wirkstoff aufweist, wobei der Wirkstoff als neutrales Molekül bereitgestellt wird. In der Anwendung hat diese Art der Bereitstellung immense Vorteile. Dass die N-(Aminoiminomethyl)-2-aminoethansäure in Calcium- und/ oder Magnesiumchloridhaltigen Lösungen eine deutlich bessere Löslichkeit aufweist ist überraschend und stellt den eigentlichen Kern der Erfindung dar.

Bevorzugt ist ein Konzentrat umfassend eine wässrige Lösung enthaltend N-(Aminoiminomethyl)-2-aminoethansäure und mindestens ein Salz aus der Gruppe Calciumchlorid und Magnesiumchlorid, dessen Lösung bezogen auf das Gesamtgewicht der Lösung einen Anteil a) von 1,5 bis 4 Gew.-%, weiter bevorzugt von 2,0 bis 4 Gew.-%, besonders bevorzugt von 2,5 bis 4 Gew.-% und ganz besonders bevorzugt von 3,0 bis 4 Gew.-% N-(Aminoiminomethyl)-2-aminoethansäure enthält.

Im Umfang der vorliegenden Erfindung beziehen sich Gehaltsangaben immer auf 20 °C.

Weiterhin bevorzugt ist ein Konzentrat umfassend eine wässrige Lösung enthaltend N-(Aminoiminomethyl)-2-aminoethansäure und mindestens ein Salz aus der Gruppe Calciumchlorid und Magnesiumchlorid, dessen Lösung bezogen auf das Gesamtgewicht der Lösung einen Anteil a) von 20 bis 70 Gew.-%, weiter bevorzugt von 30 bis 70 Gew.-% und besonders bevorzugt von 40 bis 70 Gew.-% Calciumchlorid und/oder Magnesiumchlorid enthält.

Weiter bevorzugt ist ein Konzentrat, das oder dessen wässrige Lösung neben dem Wasser, dem Futtermittelzusatz N-(Aminoiminomethyl)-2-aminoethansäure und den Salzen keine weiteren Inhaltsstoffe enthält.

Gemäß weiteren Ausführung ist damit auch ein Konzentrat umfassend eine wässrige Lösung enthaltend N-(Aminoiminomethyl)-2-aminoethansäure und mindestens ein Salz aus der Gruppe Calciumchlorid und Magnesiumchlorid Gegenstand der vorliegenden Erfindung, dessen Lösung bezogen auf das Gesamtgewicht der Lösung
a) 0,5 bis 4 Gew.-% N-(Aminoiminomethyl)-2-aminoethansäure und
b) 10 bis 70 Gew.-% Calciumchlorid und/ oder Magnesiumchlorid und
c) Rest Wasser enthält,
wobei die Inhaltstoffe a) und b) in dem Wasser in gelöster Form vorliegen und wobei das Konzentrat aus den Inhaltsstoffen a), b) und c) besteht.

Es kann jedoch vorgesehen sein, dass das Konzentrat Hilfsstoffe zur Formulierung des Konzentrates umfasst. Somit ist auch ein Konzentrat Gegenstand umfassend eine wässrige Lösung enthaltend N-(Aminoiminomethyl)-2-aminoethansäure und mindestens ein Salz aus der Gruppe Calciumchlorid und Magnesiumchlorid Gegenstand der vorliegenden Erfindung, das enthält:
a) 0,5 bis 4 Gew.-% N-(Aminoiminomethyl)-2-aminoethansäure und
b) 10 bis 70 Gew.-% Calciumchlorid und/ oder Magnesiumchlorid und
c) 0,01 bis 2 Gew.-% Formulierungshilfsstoffe, Vitamine oder Spurenelemente, und
d) Rest Wasser,
wobei die Inhaltstoffe a) und b) in dem Wasser in gelöster Form vorliegen. Bevorzugt besteht das Konzentrat aus den Inhaltsstoffen a) bis d).

Als Formulierungshilfsstoffe können Farbstoffe, Verdickungsmittel, pH-Regulatoren, Aromen, Antioxidatien eingesetzt werden.

Als pH-Regulator können insbesondere Phosphate, Citrate, Acetate und/oder Formiate eingesetzt werden.

Als Verdickungsmittel können insbesondere Alginate, Carrageenate, Tonmineralien und/oder Kieselsäure eingesetzt werden.

Als Antioxidant können insbesondere Phenole, Hydrochinon bzw. dessen Derivate, Ascorbinsäure und/oder Formiate eingesetzt werden.

Als Vitamin können insbesondere wasserlösliche Vitamine, bevorzugt Vitamin A (Retinol), Vitamin B1 (Thiamin), Vitamin B2 (Riboflavin), Vitamin B3 (Niacin), Vitamin B3 (Panthothensäure), Vitamin B6 (Pyridoxin), Vitamin B9 (Folsäure), Vitamin B12 (Cobalamin), Vitamin C (Ascorbinsäure), Vitamin D (Cholecalciferol) und/oder Vitamin K (Phyllochinon bzw. Menochinon) eingesetzt werden.

Als Spurenelement können insbesondere Bor, Magnesium, Vanadium, Chrom, Mangan, Eisen, Cobalt, Nickel, Kupfer, Zink, Selen, Molybdän und oder Jod bzw. Verbindungen der genannten Elemente eingesetzt werden.

Weiterhin bevorzugt ist ein Konzentrat, das oder dessen Lösung die N-(Aminoiminomethyl)-2-aminoethansäure und das Salz in einem Gewichtsverhältnis im Bereich von 1:1 bis 1:10 enthält. Besonders bevorzugt ist ein Konzentrat, das oder dessen Lösung N-(Aminoiminomethyl)-2-aminoethansäure und das Salz in einem Gewichtsverhältnis im Bereich von 1:3 bis 1:10, weiter bevorzugt im Bereich von 1:4 bis 1:10, enthält.

Weiterhin bevorzugt ist ein Konzentrat, das oder dessen Lösung einen pH-Wert im Bereich von pH 3 bis 9 aufweist. Besonders bevorzugt ist ein Konzentrat, das oder dessen Lösung einen pH-Wert im Bereich von pH 4 bis 8, weiter bevorzugt im Bereich von pH 5 bis 7, aufweist.

In den grundlegenden Untersuchen hat sich gezeigt, dass das erfindungsgemäße Konzentrat besonders lagerstabil ist. Es hat sich nämlich gezeigt, dass derartige Konzentrate bis zu einer Temperatur von bis zu -18 °C in flüssiger Form vorliegen und eben nicht in die feste Form übergehen. Zudem wird bis -18 °C keine Kristallisation der Inhaltsstoffe beobachtet. Somit weist das das erfindungsgemäße Konzentrat eine Kältefestigkeit bis -18 °C, bevorzugt bis -10 °C und ganz besonders bevorzugt bis -5 °C auf.

Weiterhin bevorzugt kann das Konzentrat eine Dichte im Bereich von 1,00 bis 1,50 g/cm³ (20 °C) aufweisen.

Das erfindungsgemäße Konzentrat ist hervorragend zur Herstellung einer Tränklösung zur Fütterung von Tieren, insbesondere zur Fütterung von Schweinen oder Geflügel geeignet. Hierfür muss das Konzentrat lediglich mit Wasser verdünnt werden. Mit einer geeigneten Verdünnung kann somit eine Konzentration eingestellt werden, die für die Ernährung der jeweiligen Spezies wirkungsvoll ist.

So hat sich gezeigt, dass ein Konzentrat umfassend eine Lösung enthaltend
a) 4 Gew.-% N-(Aminoiminomethyl)-2-aminoethansäure und
b1) 20 Gew.-% Calciumchlorid und/
b2) 20 Gew.-% Magnesiumchlorid und
c) 1,5 Gew.-% Vitaminmix aus verschiedenen B-Vitaminen sowie Spurenelemente, und
d) Rest Wasser,
auf das 10-fache verdünnt werden kann, ohne dass sich nach der Verdünnung ein Feststoff bildet oder absetzt. Eine derart hergestellte Tränklösung kann den Tieren direkt zur Ernährung bereitgestellt werden.

Somit ist auch die Verwendung eines Konzentrates zur Herstellung einer Tränklösung für Geflügel oder Schweine Gegenstand der vorliegenden Erfindung.

Verwendung des Konzentrates zur Herstellung einer Tränklösung für Geflügel umfassend N-(Aminoiminomethyl)-2-aminoethansäure als Futtermittelzusatz.

Die nachfolgenden Beispiele sollen das Wesen der Erfindung näher erläutern.

### Beispiele

### Beispiel 1: Herstellung von verschieden konzentrierten Calciumchlorid-Lösungen

In 100 g Wasser wurden bei 20 °C 74,0 g wasserfreies Calciumchlorid gelöst. Es bildete sich eine nahezu gesättigte Lösung, nachfolgend Lösung 1a) genannt. 50 g dieser Lösung 1a) wurden mit 16,5 g Wasser verdünnt. Es wurden 66,5 g einer zu 75 % gesättigten Lösung 1b) erhalten. 50 g der Lösung 1a) wurden mit 50 g Wasser verdünnt. Es wurden 100 g einer zu 50 % gesättigten Lösung 1c) erhalten.

### Beispiel 2: Herstellung von verschieden konzentrierten Magnesiumchlorid-Lösungen

In 50 g Wasser wurden bei 20 °C 117,5 g Magnesiumchlorid-Hexahydrat gelöst. Es bildete sich eine nahezu gesättigte Lösung, nachfolgend Lösung 2a) genannt. 50 g dieser Lösung 2a) wurden mit 16,5 g Wasser verdünnt. Es wurden 66,5 g einer zu 75 % gesättigten Lösung 2b) erhalten. 50 g der Lösung 2a) wurden mit 50 g Wasser verdünnt. Es wurden 100 g einer zu 50 % gesättigten Lösung 2c) erhalten.

### Beispiel 3: Herstellung von verschieden konzentrierten gemischten Calcium- und Magnesiumchlorid-Lösungen

In 50 g Wasser wurden bei 20 °C 37 g Calciumchlorid wasserfrei gelöst. In einem separaten Ansatz wurden in 25 g Wasser bei 20 °C 58,8 g Magnesiumchlorid-Hexahydrat gelöst. Die beiden Lösungen wurden vereinigt. Es bildete sich eine gesättigte Calcium-Magnesiumchlorid-Lösung, nachfolgend Lösung 3a) genannt. 50 g dieser Lösung 3a) wurde mit 16,5 g Wasser verdünnt. Es wurden 66,5 g einer zu 75 % gesättigten Lösung 3b) erhalten.

50 g der Lösung 3a) wurden mit 50 g Wasser verdünnt. Es wurden 100 g einer zu 50 % gesättigten Lösung 3c) erhalten.

### Beispiel 4: Löslichkeitsversuche bei 20 °C

In je 50 g der Lösungen 1a) bis 3c) wurde N-(Aminoiminomethyl)-2-aminoethansäure mit einem Gehalt > 98 % löffelweise eingetragen, solange bis der Sättigungspunkt überschritten wurde. Überschüssige N-(Aminoiminomethyl)-2-aminoethansäure wurde abfiltriert und das klare Filtrat auf seinen Gehalt an N-(Aminoiminomethyl)-2-aminoethansäure untersucht. Es wurden folgende Werte erhalten:

**Tabelle 1: Löslichkeit von N-(Aminoiminomethyl)-2-aminoethansäure bei 20 °C**

| | **Zusammensetzung des Lösemittels** | **gelöste N-(Aminoiminomethyl)-2-aminoethansäure bei 20 °C** |
|---|---|---|
| Lösung 1a) | CaCl₂ gesättigt | 31,5 g/l |
| Lösung 1b) | CaCl₂ 75 % gesättigt | 37,2 g/l |
| Lösung 1c) | CaCl₂ 50 % gesättigt | 25,4 g/l |
| Lösung 2a) | MgCl₂ gesättigt | 23,6 g/l |
| Lösung 2b) | MgCl₂ 75 % gesättigt | 39,9 g/l |
| Lösung 2c) | MgCl₂ 50 % gesättigt | 18,7 g/l |
| Lösung 3a) | Ca/MgCl₂ gesättigt | 34,8 g/l |
| Lösung 3b) | Ca/MgCl₂ 75 % gesättigt | 36,8 g/l |
| Lösung 3c) | Ca/MgCl₂ 50 % gesättigt | 22,2 g/l |

Calcium- und Magnesiumchlorid-Lösungen haben somit ein sehr hohes Lösevermögen für N-(Aminoiminomethyl)-2-aminoethansäure, insbesondere bei 75 % Sättigung. Auch eine Mischung beider Salze hat ein hervorragendes Lösevermögen.

### Beispiel 5: Löslichkeitsversuche bei 0 °C

Die Lösungen 1a) bis 2c) wurden auf 0 °C abgekühlt und analog zu Beispiel 4 mit überschüssiger N-(Aminoiminomethyl)-2-aminoethansäure versetzt. Der nicht gelöste Anteil wurde bei 0 °C abfiltriert und das Filtrat analytisch untersucht:

**Tabelle 2: Löslichkeit von N-(Aminoiminomethyl)-2-aminoethansäure bei 0 °C**

| | **Zusammensetzung des Lösemittels** | **gelöste N-(Aminoiminomethyl)-2-aminoethansäure bei 0 °C** |
|---|---|---|
| Lösung 1a) | CaCl₂ gesättigt | 15,1 g/l |
| Lösung 1b) | CaCl₂ 75 % gesättigt | 20,6 g/l |
| Lösung 1c) | CaCl₂ 50 % gesättigt | 13,4 g/l |
| Lösung 2a) | MgCl₂ gesättigt | 12,0 g/l |
| Lösung 2b) | MgCl₂ 75 % gesättigt | 18,2 g/l |
| Lösung 2c) | MgCl₂ 50 % gesättigt | 9,9 g/l |

Calcium- und Magnesiumchlorid-Lösungen haben somit auch bei 0 °C noch ein hohes Lösevermögen für N-(Aminoiminomethyl)-2-aminoethansäure, das wiederum bei 75 % Sättigung ein Maximum durchläuft. Das bestätigt die Lagerfähigkeit und Kältefestigkeit derartiger flüssiger Formulierungen von N-(Aminoiminomethyl)-2-aminoethansäure.

### Beispiel 6: Löslichkeitsversuche bei -18 °C

Die Lösungen 1c) und 2c) wurden auf -18 °C abgekühlt, wobei sie vollständig flüssig blieben. Bei -18 °C wurde N-(Aminoiminomethyl)-2-aminoethansäure bis zur Übersättigung zugegeben und der Überschuss bei -18 °C abfiltriert. Das Filtrat wurde analytisch untersucht.

**Tabelle 3: Löslichkeit von N-(Aminoiminomethyl)-2-aminoethansäure bei 18 °C**

| | **Zusammensetzung des Lösemittels** | **gelöste N-(Aminoiminomethyl)-2-aminoethansäure bei -18 °C** |
|---|---|---|
| Lösung 1c) | CaCl₂ 50 % gesättigt | 8,8 g/l |
| Lösung 2c) | MgCl₂ 50 % gesättigt | 6,3 g/l |

Auch bei extremer Kälte, bei der rein wässrige Formulierungen längst komplett durchgefroren wären, lässt sich noch eine flüssige Formulierung von N-(Aminoiminomethyl)-2-aminoethansäure herstellen und handhaben.

### Beispiel 7 (Vergleich): Löslichkeitsversuche in reinem Wasser

Zu 100 g Wasser wurde bei 20°C N-(Aminoiminomethyl)-2-aminoethansäure im Überschuss gegeben. Der ungelöste Anteil wurde bei 20°C abfiltriert und das Filtrat analytisch untersucht. Analog wurde mit Wasser von 0°C verfahren. Die Löslichkeitsdaten für N-(Aminoiminomethyl)-2-aminoethansäure waren:

**Tabelle 4: Löslichkeit von N-(Aminoiminomethyl)-2-aminoethansäure in Wasser**

| | **Zusammensetzung des Lösemittels** | **gelöste N-(Aminoiminomethyl)-2-aminoethansäure** |
|---|---|---|
| Wasser 20 °C | reines Wasser | 3,5 g/l |
| Wasser 0 °C | reines Wasser | 1,9 g/l |

Reines Wasser hat also im Vergleich zu Calcium- oder Magnesiumchlorid enthaltenden wässrige Lösungen ein sehr viel geringeres Lösevermögen für N-(Aminoiminomethyl)-2-aminoethansäure. Für eine Anwendung im Bereich der Tierernährung reicht diese Konzentration bei Weitem nicht aus.

### Beispiel 8 (Vergleich): Löslichkeitsversuche in Lösungen von anderen Calcium- und Magnesiumsalzen bei 20 °C

8a) Zu 25 g Wasser wurden bei 40 °C 2,5 g wasserfreies Calciumformiat gegeben, wobei die Löslichkeitsgrenze erreicht wurde. Dann wurde N-(Aminoiminomethyl)-2-aminoethansäure im Überschuss zugegeben. Nach Abkühlen auf 20 °C wurde filtriert und das Filtrat 8a) analytisch untersucht.

Analog wurde mit den weiteren Beispielen verfahren, wobei folgende Salze eingesetzt wurden:
8b) 9,4 g Calciumacetat-Dihydrat
8c) 5,4 g Calciumpropionat-Hemihydrat
8d) 3,3 g Magnesiumformiat-Dihydrat
8e) 10,0 g Magnesiumacetat-Tetrahydrat
8f) 3,6 g Magnesiumpropionat wasserfrei

Es wurden folgende Löslichkeiten für N-(Aminoiminomethyl)-2-aminoethansäure in den genannten Salzlösungen ermittelt:

**Tabelle 5: Löslichkeit von N-(Aminoiminomethyl)-2-aminoethansäure in verschiedenen Lösungen**

| | **Zusammensetzung des Lösemittels** | **gelöste N-(Aminoiminomethyl)-2-aminoethansäure bei 20 °C** |
|---|---|---|
| Lösung 8a) | Calciumformiat | 8,3 g/l |
| Lösung 8b) | Calciumacetat | 8,9 g/l |
| Lösung 8c) | Calciumpropionat | 8,3 g/l |
| Lösung 8d) | Magnesiumformiat | 7,7 g/l |
| Lösung 8e) | Magnesiumacetat | 8,0 g/l |
| Lösung 8f) | Magnesiumpropionat | 7,4 g/l |

Gegenüber reinem Wasser wird durch die genannten Calcium- und Magnesiumcarboxylate die Löslichkeit von N-(Aminoiminomethyl)-2-aminoethansäure zwar deutlich erhöht, aber nicht in einem derartigen Maße wie durch Calcium- oder Magnesiumchlorid. Derartige Salzlösungen als Formulierungsbestandteil für eine flüssige Formulierung von N-(Aminoiminomethyl)-2-aminoethansäure sind damit weniger geeignet.

## Patentansprüche

1. Konzentrat umfassend eine wässrige Lösung enthaltend N-(Aminoiminomethyl)-2-aminoethansäure und mindestens ein Salz aus der Gruppe Calciumchlorid und Magnesiumchlorid, **dadurch gekennzeichnet, dass** die Lösung bezogen auf das Gesamtgewicht der Lösung enthält:
a) 0,5 bis 4 Gew.-% N-(Aminoiminomethyl)-2-aminoethansäure und
b) 10 bis 70 Gew.-% Calciumchlorid und/ oder Magnesiumchlorid und
c) Rest Wasser,
wobei die Inhaltstoffe a) und b) in der Lösung in gelöster Form vorliegen.

2. Konzentrat nach Anspruche 1, **dadurch gekennzeichnet, dass** die N-(Aminoiminomethyl)-2-aminoethansäure und das Salz in der Lösung in einem Gewichtsverhältnis von 1:1 bis 1:10 vorliegen.

3. Konzentrat nach Anspruch 1, **dadurch gekennzeichnet, dass** das Konzentrat und/oder die Lösung einen pH-Wert im Bereich von pH 3 bis 9 aufweist.

4. Konzentrat nach einem der zuvor genannten Ansprüche, **dadurch gekennzeichnet, dass** das Konzentrat eine Dichte von 1,00 bis 1,50 g/cm³ (20 °C) aufweist.

5. Verwendung eines Konzentrates nach Anspruch 1 zur Herstellung einer Tränklösung für Schweine oder Geflügel.

## Claims

1. Concentrate comprising an aqueous solution containing N-(aminoiminomethyl)-2-aminoacetic acid and at least one salt from the group of calcium chloride and magnesium chloride, **characterised in that**, based on the total weight of the solution, the solution contains:
a) 0.5 to 4 wt.-% N-(aminoiminomethyl)-2-aminoacetic acid and
b) 10 to 70 wt.-% calcium chloride and/or magnesium chloride and
c) remainder water,
wherein the components a) and b) are present in the solution in dissolved form.

2. Concentrate according to claim 1, **characterised in that** the N-(aminoiminomethyl)-2-aminoacetic acid and the salt are present in the solution in a weight ratio of from 1:1 to 1:10.

3. Concentrate according to claim 1, **characterised in that** the concentrate and/or the solution has a pH value in the range of pH 3 to 9.

4. Concentrate according to any one of the previous claims, **characterised in that** the concentrate has a density of from 1.00 to 1.50 g/cm³ (20°C).

5. Use of a concentrate according to claim 1 for producing a drinking solution for pigs or poultry.

## Revendications

1. Concentré comprenant une solution aqueuse contenant l'acide N-(aminoiminométhyl)-2-aminoéthanoïque et au moins un sel du groupe chlorure de calcium et chlorure de magnésium, **caractérisé en ce que** la solution contient, par rapport au poids total de la solution :
a. 0,5 à 4 % en poids d'acide N-(aminoiminométhyl)-2-aminoéthanoïque, et
b. 10 à 70 % en poids de chlorure de calcium et/ou de chlorure de magnésium, et
c. le reste étant de l'eau,
les ingrédients a) et b) étant présents dans la solution sous forme dissoute.

2. Concentré selon la revendication 1, **caractérisé en ce que** l'acide N-(aminoiminométhyl)-2-aminoéthanoïque et le sel sont présents dans la solution dans un rapport pondéral de 1:1 à 1:10.

3. Concentré selon la revendication 1, **caractérisé en ce que** le concentré et/ou la solution présente un pH dans la plage de pH 3 à 9.

4. Concentré selon l'une des revendications précédentes, **caractérisé en ce que** le concentré a une densité de 1,00 à 1,50 g/cm³ (20 °C).

5. Utilisation d'un concentré selon la revendication 1 pour la préparation d'une solution d'abreuvement pour les porcs ou les volailles.
